(19) Europäisches Patentamt
European Patent Office
Office européen des brevets

(11) **EP 3 390 976 B1**

(12) # EUROPÄISCHE PATENTSCHRIFT

(45) Veröffentlichungstag und Bekanntmachung des Hinweises auf die Patenterteilung:
**22.09.2021 Patentblatt 2021/38**

(21) Anmeldenummer: **16797564.8**

(22) Anmeldetag: **17.11.2016**

(51) Int Cl.:
*B01L 3/00* (2006.01)    *G01F 1/684* (2006.01)
*G01F 1/698* (2006.01)    *G01P 5/12* (2006.01)
*G01F 1/692* (2006.01)

(86) Internationale Anmeldenummer:
**PCT/EP2016/077966**

(87) Internationale Veröffentlichungsnummer:
**WO 2017/102235 (22.06.2017 Gazette 2017/25)**

(54) **VERFAHREN ZUR BESTIMMUNG EINER FLUSSRATE BZW. STRÖMUNGSGESCHWINDIGKEIT EINES MEDIUMS**

METHOD FOR DETERMINING A FLOW RATE OF A MEDIUM

PROCÉDÉ DE DÉTERMINATION D'UN DÉBIT OU D'UNE VITESSE D'ÉCOULEMENT D'UN MILIEU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2015 DE 102015121866**

(43) Veröffentlichungstag der Anmeldung:
**24.10.2018 Patentblatt 2018/43**

(73) Patentinhaber: **Jobst Technologies GmbH**
**79108 Freiburg (DE)**

(72) Erfinder: **JOBST, Gerhard**
**79108 Freiburg (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**EP-A1- 1 094 306**     **EP-A1- 1 094 306**
**DE-A1- 3 637 497**     **DE-A1-102011 081 923**
**DE-A1-102011 081 923**     **US-A- 4 651 564**
**US-A- 4 651 564**     **US-B1- 6 550 324**

**Beschreibung**

Die Erfindung bezieht sich auf ein Verfahren sowie eine Vorrichtung zur Bestimmung einer Flussrate bzw. Strömungsgeschwindigkeit eines Mediums.

Zur Bestimmung einer Flussrate bzw. Strömungsgeschwindigkeit eines Mediums bzw. eines Fluides, bspw. eines Gases oder Gasgemisches sind thermische Strömungssensoren bekannt. Diese nutzen aus, dass ein (strömendes) Medium Wärme transportiert. Derartige Strömungssensoren weisen dabei den klassischen Strukturaufbau mit zumindest einem Heizelement und zumindest einem Temperatursensorelement auf, um die Flussrate bzw. Strömungsgeschwindigkeit des Mediums zu bestimmen.

Kalorimetrische thermische Strömungssensoren bestimmen über eine Temperaturdifferenz zwischen zwei Temperatursensorelementen, die flussabwärts (engl. "downstream") und flussaufwärts (engl. "upstream") von dem Heizelement auf einem Substrat angeordnet sind, den Durchfluss bzw. die Flussrate des Fluids in einem Kanal. Hierzu wird ausgenutzt, dass die Temperaturdifferenz bis zu einem gewissen Punkt linear zu dem Durchfluss bzw. der Flussrate ist. Dieses Verfahren bzw. die Methode ist in der einschlägigen Literatur, wie zum Beispiel in EP 1 094 306 A1 ausgiebig beschrieben.

Nachteilig an den aus dem Stand der Technik bekannten kalorimetrischen Strömungssensoren ist, dass diese eine kontinuierliche Wärmeeinkopplung während des Betriebes in das Medium verursachen, sodass das Medium eine ständige Erhitzung erfährt.

Es ist daher Aufgabe der Erfindung eine Möglichkeit anzugeben, bei der die Wärmeeinkopplung in ein Medium reduziert wird.

Gelöst wird die Aufgabe durch ein Verfahren, eine Vorrichtung zur Bestimmung einer Flussrate bzw. Strömungsgeschwindigkeit, ein Katheder sowie ein Lab-on-a-Chip System.

Hinsichtlich des Verfahrens wird die Aufgabe durch ein Verfahren zur Bestimmung einer Flussrate bzw. Strömungsgeschwindigkeit eines Mediums, welches zumindest mit einem ersten und einem zweiten Temperatursensorelement und einem Heizelement in Wechselwirkung steht gelöst, wobei das Verfahren die folgenden Verfahrensschritte aufweist:

-  Erhitzung des Mediums mittels des Heizelements für eine vorgegeben Heizdauer, wobei das Medium vor der Erhitzung weitgehend in einem thermischen Gleichgewicht mit zumindest dem ersten und zweiten Temperatursensorelement steht;
-  Erfassung zumindest eines ersten und eines zweiten Messwertes mit Hilfe des ersten Temperatursensorelementes und zumindest eines dritten und eines vierten Messwertes mit Hilfe des zweiten Temperatursensorelementes zur Charakterisierung eines ersten bzw. zweiten Temperaturanstieges des Mediums;
-  Ermittlung der Flussrate bzw. Strömungsgeschwindigkeit des Mediums anhand der zumindest beiden Temperaturanstiege;

wobei zur Charakterisierung der beiden Temperaturanstiege für den erfassten ersten Temperaturanstieg eine erste Konstante und ein erster Steigungswert und für den zweite Temperaturanstieg eine zweite Konstante und ein zweiter Steigungswert ermittelt wird,
wobei über die beiden Konstanten jeweils ohmsche Widerstandswerte für das jeweilige Temperatursensorelement im thermischen Gleichgewicht ermittelt werden und über die beiden Steigungswerte jeweils eine Temperaturerhöhung für das jeweilige Temperatursensorelement ermittelt wird, wobei die Bestimmung von Konstanten und Steigungswerten nach einer Transformation der Zeitwerte zur Linearisierung des Temperaturanstiegs durchgeführt wird.

Im Folgenden ist als thermisches Gleichgewicht ein Zustand zu verstehen, bei dem das Medium thermisch weitgehend equilibriert ist, sodass das Medium nahezu auf gleicher Temperatur mit dem ersten und/oder zweiten Temperatursensorelement ist.

Der Erfindung liegt die Idee zugrunde, dass nicht die weitgehende Stabilisierung der sich ausbildenden Temperaturgradienten abgewartet wird, bevor ein Messwert erfasst wird. Aus den erfassten Messwerten wird anschließend die Flussrate bzw. Strömungsgeschwindigkeit bestimmt. Im Gegensatz zu den aus dem Stand der Technik bekannten Strömungssensoren findet somit die Erfassung von Messwerten innerhalb einer kurzen Zeitdauer nach einem auf das Heizelement gegeben Heizpuls statt. Die Zeitdauer ist deutlich kleiner als eine Zeitdauer, die bei den aus dem Stand der Technik bekannten Strömungssensoren abgewartet werden muss.

Auf diese Weise kann die Wärmemenge, welche in das Medium abgegeben wird, minimal gehalten werden. Die Medien werden somit weniger thermisch belastet. Somit lässt sich insbesondere die Flussrate von hitzeempfindlichen Medien bestimmen.

Eine vorteilhafte Ausführungsform des erfindungsgemäßen Verfahrens sieht vor, dass das Heizelement zur Erhitzung des Mediums für eine vorgegebene Heizdauer von einem ersten Zustand, insbesondere ersten Spannungszustand, in dem sich das Heizelement im ersten thermischen Gleichgewicht befindet in einen zweiten Zustand, insbesondere zweiten Spannungszustand, gebracht wird und wobei das Heizelement nach der vorgegebenen Heizdauer wieder auf den ersten Zustand gebracht wird. Dadurch, dass keine kontinuierliche Erhitzung des Mediums durch das Heizelement stattfindet, kann, wie bereits erwähnt, der Hitzeeintrag in das Medium reduziert bzw. gesenkt werden. Die Ausführungsform kann ferner vorsehen, dass der erste Zustand einen von null abweichenden Spannungswert aufweist. In dem Fall, dass ein von null abweichender Spannungswert verwendet wird, kann auch während einer langen Periode, zwischen zwei aufeinanderfolgenden Erhitzungszyklen, eine Auswertung der Flussrate mit deutlich geringerer Genauigkeit als während den Erhitzungszyklen bestimmt werden.

Eine weitere vorteilhafte Ausführungsform des erfindungsgemäßen Verfahrens sieht vor, dass zumindest die Erfassung des zweiten und vierten Messwertes, vorzugsweise aller weiteren Messwerte, noch während die Temperatur des jeweiligen Temperatursensorelementes steigt erfolgt.

Eine vorteilhafte Ausführungsform des erfindungsgemäßen Verfahrens sieht vor, dass als vorgegebene Heizdauer eine Dauer von weniger als 2 Sekunden, vorzugsweise weniger als 1 Sekunde verwendet wird.

Eine weitere vorteilhafte Ausführungsform des erfindungsgemäßen Verfahrens sieht vor, dass die Messwerte innerhalb der vorgegebenen Heizdauer erfasst werden.

Eine weitere vorteilhafte Ausführungsform des erfindungsgemäßen Verfahrens sieht vor, dass die Verfahrensschritte, insbesondere die Erhitzung des Mediums, wiederkehrend, insbesondere zyklisch oder aperiodisch, durchgeführt werden. Insbesondere sieht die Ausführungsform vor, dass ein Zeitintervall zwischen zwei aufeinanderfolgenden Erhitzungen des Mediums so gewählt wird, dass sich innerhalb des Zeitintervalls das thermische Gleichgewicht zwischen zumindest dem ersten und zweiten Temperatursensorelement und dem Medium im Wesentlichen wieder eingestellt hat. Die wiederkehrende Durchführung des Verfahrens bietet den Vorteil, dass das Verfahren auch von Sensoren durchgeführt werden kann, dessen Heizstruktur bzw. Heizstrukturen einer dauerhaften Belastung aufgrund der Erhitzung nicht standhalten würden.

Eine weitere vorteilhafte Ausführungsform des erfindungsgemäßen Verfahrens sieht vor, dass zur Ermittlung der Flussrate bzw. Strömungsgeschwindigkeit des Mediums zumindest einer der folgenden Schritte durchgeführt wird:

- Bestimmung jeweils einer an das erste bzw. das zweite Temperatursensorelement abgegebenen thermischen Leistung durch das Medium,
- Normalisierung der beiden Temperaturerhöhungen, insbesondere durch Dividieren der Temperaturerhöhung mit der abgegebenen thermischen Leistung und Bildung einer Differenz der beiden normalisierten Temperaturerhöhungen,
- Linearisierung der Differenz der beiden normalisierten Temperaturerhöhungen durch Division mit einer Funktion welche jene normalisierten Temperaturerhöhungen enthält
- eine Multiplikation der linearisierten Differenz der beiden normalisierten Temperaturerhöhungen mit einem Kalibrationsfaktor die Flussrate bzw. Strömungsgeschwindigkeit ermittelt wird,
- Korrektur der ermittelten Flussrate bzw. Strömungsgeschwindigkeit über eine Lookup-Tabelle.

Eine weitere vorteilhafte Ausführungsform des erfindungsgemäßen Verfahrens sieht vor, dass das Heizelement mit einem Tastverhältnis von nicht mehr als 10%, vorzugsweise nicht mehr als 5%, betrieben wird, um eine ins Medium abgegebene thermische Leistung zu begrenzen.

Eine weitere vorteilhafte Ausführungsform des erfindungsgemäßen Verfahrens sieht vor, dass die ins Medium abgegebene mittlere thermische Leistung nicht mehr als 2 mW, insbesondere nicht mehr als 1 mW beträgt.

Eine weitere vorteilhafte Ausführungsform des erfindungsgemäßen Verfahrens sieht vor, dass das Medium eine biologische Flüssigkeit, bspw. ein Nährmedium oder ein Blut, aufweist.

Hinsichtlich der Vorrichtung wird die Aufgabe durch eine Vorrichtung zur Bestimmung einer Flussrate bzw. Strömungsgeschwindigkeit eines Mediums mit einer Struktur und einer Recheneinheit gelöst, wobei die Struktur in thermischer Wechselwirkung mit dem Medium steht und zumindest ein erstes Temperatursensorelement, ein zweites Temperatursensorelement und ein Heizelement umfasst, wobei die Recheneinheit dazu ausgelegt ist, das Verfahren gemäß zumindest einer der zuvor beschriebenen Ausführungsformen zu steuern.

Eine vorteilhafte Ausgestaltung der Vorrichtung sieht vor, dass das Heizelement zumindest in eines der beiden Temperatursensorelemente integriert ist.

Eine alternative Ausgestaltung der Vorrichtung sieht vor, dass das Heizelement separat von dem ersten und dem zweiten Temperatursensorelement ausgebildet ist und zwischen den beiden Temperatursensorelementen angeordnet ist.

Eine weitere vorteilhafte Ausgestaltung der Vorrichtung sieht vor, dass die Struktur, welche das erste und das zweite Temperatursensorelement und das Heizelement umfasst, auf einem Substrat ausgebildet ist und eine Fläche kleiner einem Quadratmillimeter aufweist.

Eine weitere vorteilhafte Ausgestaltung der Vorrichtung sieht vor, dass die Struktur eine mikrostrukturierte elektrisch leitfähige Schicht aufweist und das erste Temperatursensorelement einen ersten ohmschen Widerstand und das zweite Temperatursensorelement einen zweiten ohmschen Widerstand aufweist, wobei die Widerstände einen Toleranzwert von bis zu 10%, insbesondere von bis zu 20% aufweisen, wobei die Widerstände um den Toleranzwert voneinander abweichen können. Durch das erfindungsgemäße Verfahren können Vorrichtungen zur Bestimmung einer Flussrate bzw. Strömungsgeschwindigkeit verwendet werden, die eine Abweichung von bis zu 20% bzgl. ihrer Widerstandswerte aufweisen. Somit entfällt der bei den aus dem Stand der Technik bekannten Vorrichtungen zusätzlich durchgeführte Herstellungsschritt des Lasertrimmens.

Hinsichtlich des Katheders wird die Aufgabe durch einen Katheder, welcher zumindest eine Vorrichtung gemäß einer der zuvor beschriebenen Ausgestaltungen aufweist, gelöst.

Hinsichtlich des Lab-on-a-chip Systems wird die Aufgabe durch ein Lab-on-a-Chip System gelöst, welches zumindest eine Vorrichtung gemäß einer der zuvor beschriebenen Ausgestaltungen aufweist. Derartige Lab-on-a-Chip Systeme können neben der erfindungsgemäßen Vorrichtung ferner weitere Mittel bzw. Funktionen aufweisen. Beispielsweise können sie Mittel als chemischer- und/oder Biosensor, physikalischer Sensor, zur Probenaufbereitung, sowie Verstärkungssysteme wie PCR, Kammern zur Kultivierung von Zellen und Mikroorganismen und/oder Mikrofluidiken, etc. umfassen.

Die Erfindung wird anhand der nachfolgenden Zeichnungen näher erläutert. Es zeigt:

Fig. 1a: exemplarisch eine erste Struktur, die zur Durchführung des erfindungsgemäßen Verfahrens in einer erfindungsgemäßen Vorrichtung verwendbar ist,

Fig. 1b: exemplarisch eine alternative zweite Struktur, die ebenfalls zur Durchführung des erfindungsgemäßen Verfahrens in einer erfindungsgemäßen Vorrichtung verwendbar ist,

Fig. 2a: ein erstes Ausführungsbeispiel einer elektrischen Schaltung zur Durchführung des erfindungsgemäßen Verfahrens mittels der in Fig. 1a dargestellten ersten Struktur,

Fig. 2b: ein zweites Ausführungsbeispiel einer elektrischen Schaltung zur Durchführung des erfindungsgemäßen Verfahrens mittels der in Fig. 1a dargestellten ersten Struktur,

Fig. 2c: ein drittes Ausführungsbeispiel einer elektrischen Schaltung zur Durchführung des erfindungsgemäßen Verfahrens mittels der in Fig. 1a dargestellten ersten Struktur,

Fig. 2d: ein viertes Ausführungsbeispiel einer elektrischen Schaltung zur Durchführung des erfindungsgemäßen Verfahrens mittels der in Fig. 1b dargestellten zweiten Struktur,

Fig. 3a: eine Darstellung einer Messkurve gemäß des erfindungsgemäßen Verfahrens,

Fig. 3b und 3c: Darstellung der transformierten Messkurven gemäß Fig. 3a,

Fig. 3d: exemplarisch eine Kurve eines Ausdrucks der Dimension K/W,

Fig. 3e: eine anhand des Ausdrucks der Dimension K/W ermittelte Flussrate,

Fig. 4: eine Darstellung der wiederholten Durchführung einer Messung,

Fig. 5: eine Modulation der mittleren abgegebenen Leistung durch Änderung der vorgegebenen Heizdauer,

Fig. 6: einen Querschnitt einer Ausgestaltung der erfindungsgemäßen Vorrichtung.

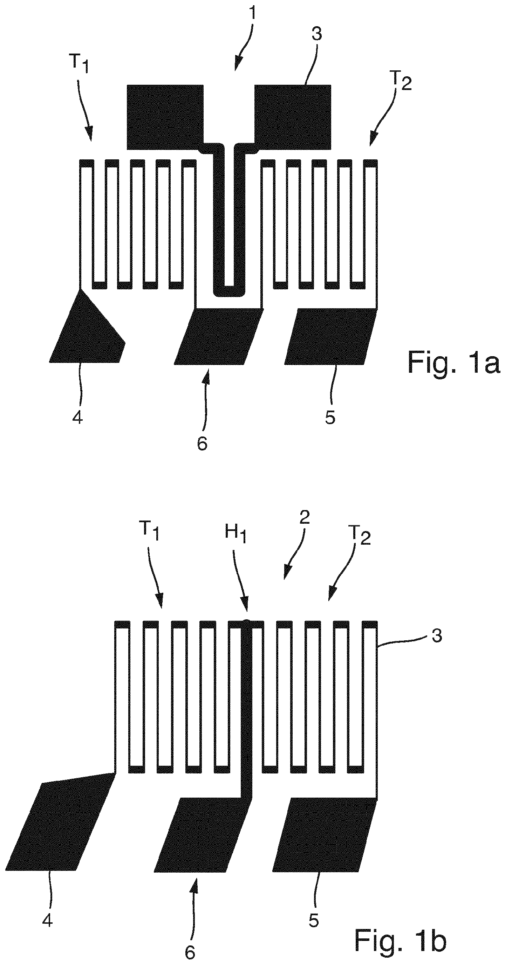

Figur 1a zeigt eine erste Struktur 1 die mit dem erfindungsgemäßen Verfahren verwendet werden kann. In Fig. 1a und Fig. 1b stellen die ausgefüllten Flächen elektrisch leitfähige Schichten 3 dar, die mittels gängiger Methoden der Mikrostrukturtechnik auf einem Substrat 14 herstellbar sind. Gängige Methoden können bspw. Dünnschicht- oder Dickschichtverfahren sein. Das Substrat 14 kann bspw. Silizium oder in vorteilhafter Weise Aluminiumoxid oder Polyimid umfassen.

Die erste Struktur 1 umfasst ein erstes Temperatursensorelement $T_1$, ein zweites Temperatursensorelement $T_2$ und ein Heizelement $H_1$. Das erste Temperatursensorelement $T_1$ ist über einen ersten Messkontakt 4 und einen gemeinsamen Massekontakt 6 ansteuerbar. Das zweite Temperatursensorelement $T_2$ ist über einen zweiten Messkontakt 5 und den gemeinsamen Massekontakt 5 ansteuerbar. Die beiden Temperatursensorelemente $T_1$ und $T_2$ werden

somit über den ersten oder zweiten Messkontakt 4, 5 in Verbindung mit einem gemeinsamen Massekontakt 6 angeschlossen. Das Heizelement $H_1$ ist über eine erste Zuleitung 21 und eine zweite Zuleitung 22 anschließbar.

Fig. 1b zeigt exemplarisch eine alternative zweite Struktur 2, die ebenfalls zur Durchführung des erfindungsgemäßen Verfahrens verwendbar ist.

Die zweite Struktur 2 umfasst ebenfalls ein erstes und ein zweites Temperatursensorelement $T_1$, $T_2$, die wiederum über einen ersten und einen zweiten Messkontakt 4, 5 sowie über einen gemeinsamen Massekontakt 6 anschließbar sind.

Das Heizelement $H_1$ der zweiten Struktur 2 ist, im Gegensatz zu dem der ersten Struktur 1, nicht separat ausgebildet, sondern wird durch das zweite Temperatursensorelement $T_2$, welches somit sowohl als Temperatursensorelement aber auch als Heizelement fungiert, gebildet. Angesteuert wird das Heizelement $H_1$ über den zweiten Messkontakt 5, welcher somit auch als Zuleitung dient, und den gemeinsamen Massekontakt 6. Denkbar ist natürlich auch eine Variante, bei der das Heizelement $H_1$ aus dem ersten Temperatursensorelement $T_1$ gebildet wird.

Vorzugsweise werden sowohl die erste Struktur 1 als auch die zweite Struktur 2 durch einen einzigen mikromechanischen Herstellungsschritt hergestellt. Generell ist es aber für die Erfindung unerheblich, ob die Struktur in einem einzigen Herstellungsschritt oder aus mehreren Schritten oder aber auch anderen Herstellungsmethoden hergestellt werden.

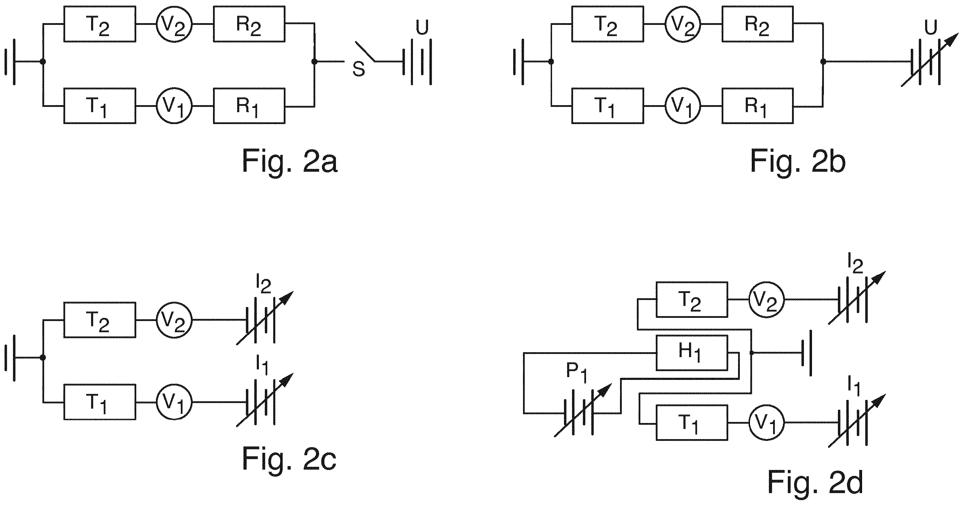

Die Fig. 2a bis 2d zeigen Ausführungsbeispiele von möglichen elektrischen Schaltungen die zur Durchführung des erfindungsgemäßen Verfahrens verwendbar sind. In allen Ausführungsbeispielen stellen $V_1$ und $V_2$ zwei Messpunkte dar. An den Messpunkten wird die elektrische Spannung zur Erfassung der Messwerte während des Messvorgangs abgegriffen.

Konkret zeigt Fig. 2a ein erstes Ausführungsbeispiel einer elektrischen Schaltung zur Durchführung des erfindungsgemäßen Verfahrens mittels einer der beiden zuvor dargestellten Strukturen 1 oder 2. Die beiden Temperatursensorelemente $T_1$ und $T_2$ sind dabei über eine Spannungsquelle U und einen Schalter S jeweils mit einem elektrischen Widerstand in Reihe geschaltet, sodass sich eine Brückenschaltung ergibt. Typischerweise sind die beiden Werte der Widerstände $R_1$ und $R_2$ im Wesentlichen gleich.

Fig. 2b zeigt ein zweites Ausführungsbeispiel einer elektrischen Schaltung zur Durchführung des erfindungsgemäßen Verfahrens mittels einer der zuvor dargestellten Strukturen 1 oder 2. Dabei unterscheidet sich das zweite von dem ersten Ausführungsbeispiel insofern, dass die Funktion des Schalters S zum Ändern der Heizspannung durch eine regelbare Spannungsquelle ersetzt ist.

Fig. 2c zeigt ein drittes Ausführungsbeispiel einer elektrischen Schaltung zur Durchführung des erfindungsgemäßen Verfahrens mittels einer der zuvor dargestellten Strukturen 1 oder 2. Hierbei ist die Funktion des Spannungsteilers in Form der beiden Widerstände, wie sie in den Figuren 2a und 2b dargestellt sind, durch eine erste und eine zweite regelbare Stromquelle $I_1$ und $I_2$ ersetzt.

Fig. 2d zeigt ein viertes Ausführungsbeispiel einer elektrischen Schaltung zur Durchführung des erfindungsgemäßen Verfahrens mittels der zweiten Struktur 2. Eine regelbare elektrische Leistungsquelle P1 heizt das Heizelement $H_1$, welches gemäß der zweiten Struktur 2 entweder aus dem ersten oder dem zweiten Temperatursensorelement $T_1$, $T_2$ gebildet wird. Die beiden Stromquellen $I_1$ und $I_2$ geben nur einen sehr kleinen Strom von beispielsweise 10 $\mu$A an die beiden Temperatursensorelemente $T_1$ und $T_2$ ab, sodass sich diese nur unwesentlich erwärmen. Auf diese Weise wird sichergestellt, dass die wesentliche Abgabe der Wärme am Heizelement stattfindet.

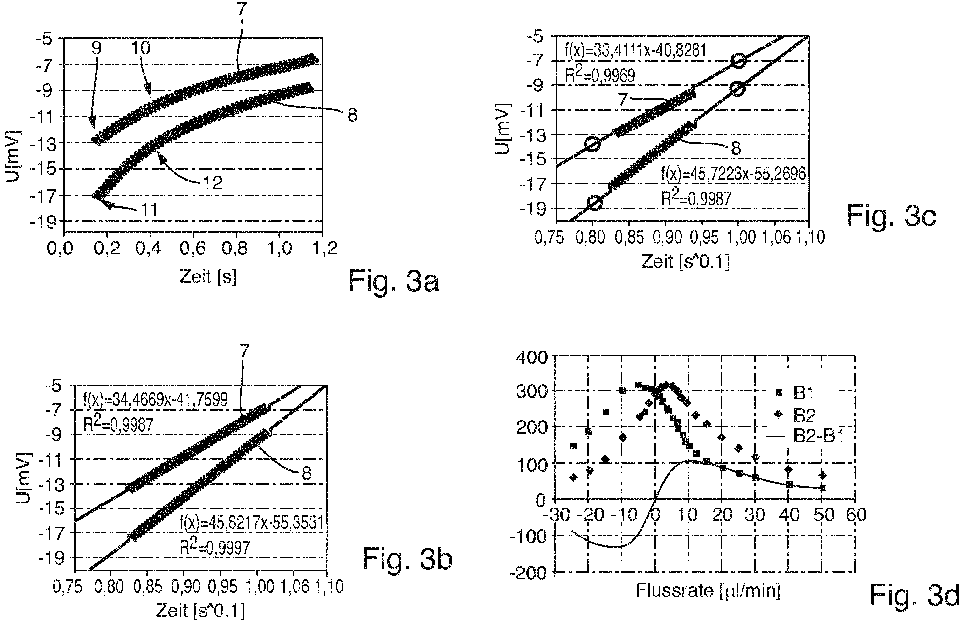

Fig. 3a zeigt eine Darstellung einer realen Messkurve gemäß dem erfindungsgemäßen Verfahren. Die Messung wurde mit einer erfindungsgemäßen Vorrichtung zur Bestimmung der Flussrate bzw. Strömungsgeschwindigkeit aufgenommen. Hierzu wurde ein Medium, welches sich bis zur Erhitzung in dem thermischen Gleichgewicht mit den beiden Heiz- und/oder Temperatursensorelementen befindet, erhitzt. Auf der Ordinate ist die Spannung und auf der Abszisse die Zeit aufgetragen. Gezeigt sind zwei Temperaturanstiege 7 und 8, die sich aus den jeweiligen an den zwei Messpunkten $V_1$ und $V_2$ erfassten Messwerten 9, 10, 11, 12 ergeben. Der obere Verlauf der Spannung entspricht dem ersten Temperaturanstieg 7 und der untere Verlauf dem zweiten Temperaturanstieg 8. Der erste Temperaturanstieg 7 wurde dabei über eine Vielzahl von Messwerte erfasst. Prinzipiell sind aber pro Temperaturanstieg nur ein erster und ein zweiter bzw. ein dritter und ein vierter Messwert zur Erfassung des jeweiligen Temperaturanstieges nötig.

Aus der Messkurve, wird ersichtlich, dass derartige Systeme selbst nach mehr als einer Sekunde noch deutlich von einem weiteren thermischen Gleichgewicht, welches sich zwischen dem erhitzen Medium und den beiden Heiz- und/oder Temperatursensorelementen nach einer Relaxationszeit ausbildet bzw. ausbilden würde, entfernt sind.

Aus diesem Grund wird bei den, aus dem Stand der Technik bekannten Verfahren typischerweise mindestens 30 Sekunden abgewartet, bevor Messwerte zur Bestimmung der Flussrate bzw. Strömungsgeschwindigkeit ausgewertet werden.

Im Gegensatz hierzu werden gemäß des erfindungsgemäßen Verfahrens die Messwerte bereits in den ersten Sekunden, bevorzugt in den ersten beiden Sekunden, besonders bevorzugt innerhalb der ersten Sekunde, nachdem eine Erhitzung des Mediums durch das Heizelement $H_1$ erfolgt, ausgewertet. Somit findet bei der Erfindung eine Auswertung der beiden erfassten Temperaturanstiege 7, 8 statt. Im Gegensatz hierzu, wird bei den aus dem Stand der Technik bekannten Verfahren, die Ausbildung des weiteren thermischen Gleichgewichtes zwischen den beiden Temperatursensorelementen $T_1$, $T_2$ und dem erhitzen Medium 18 abgewartet. Die Ausbildung eines solchen weiteren thermischen Gleichgewichtes dauert typischerweise mindestens 30 Sekunden. In dem vorliegenden Fall betrug die Messdauer 0,5 Sekunden. Dies ist über eine schwarze vertikale Linie exemplarisch angedeutet.

Aufgrund dessen, dass die Auswertung vor der Ausbildung des thermischen Gleichgewichtes erfolgt, lässt sich das erfindungsgemäße Verfahren mit einer kurzen Heizdauer, bspw. einem Heizpuls, welcher an das Heizelement $H_1$ angelegt wird, betreiben. Die Dauer und/oder Intensität der Heizpulse kann dabei entsprechend der erfindungsgemäßen Vorrichtung angepasst und/oder variiert werden. Vorteilhafterweise beträgt die vorgegebene Heizdauer weniger als 2 Sekunden, besonders vorteilhaft weniger als 1 Sekunde. Aufgrund der kurzen Heizdauer können somit auch Heizelemente bzw. Strukturen von Heizelementen, die einer dauerhaften Belastung in Form einer kontinuierlich angelegten Heizspannung nicht standhalten würden, verwendet werden. Somit ist das erfindungsgemäße Verfahren auch mit den aus dem Stand der Technik bekannten Vorrichtungen anwendbar.

Fig. 3b zeigt eine transformierte reale Messkurve gemäß Fig. 3a. Die in Fig. 3b dargestellten Messkurven wurden mittels Regressionen gemäß der nachfolgenden Gleichung 1 angenähert:

$$U_n = a_n + b_n * t^k \qquad \text{(Gleichung 1)}$$

mit

n = 1, 2 für das entsprechende Temperatursensorelement,
k = 0,1 für das vorliegende Beispiel.

Hierbei stellt Gleichung 1 eine bevorzugte Variante einer Annäherungsfunktion dar. Denkbar sind jedoch auch andere Annäherungsfunktionen.

In Fig. 3b sind nur die für die Messdauer von 0,5 Sekunden erfassten Messwerte der jeweiligen Temperatursensorelemente dargestellt. Die schwarzen Kreise markieren die Zeitpunkte 0,1 und 1 Sekunde. Die Differenz der Funktionswerte der Regressionen wird in dem nachfolgenden beschrieben Verfahren als "$B_n$" verwendet und berechnet sich gemäß Gleichung 2 als Änderung zwischen zwei willkürlich gewählten Zeitpunkten. Diese Vorgehensweise erlaubt z.B. den Faktor k der Annäherungsfunktion im Betrieb dynamisch zu ändern (um eine verbesserte Annäherung zu erhalten) ohne dass das Ergebnis $B_n$ beeinflusst wird.

$$B_n = a_n + b_n * t^k - a_n + b_n * t^k = b_n * (1 - 0,1^k) \qquad \text{(Gleichung 2)}$$

An dieser Stelle sei darauf hingewiesen, dass das vorläufige Ergebnis nicht nur, wie aus dem Stand der Technik bekannt, aus einem einzelnen Parameter in Form der Spannungsdifferenz zwischen $V_1$ und $V_2$ für das jeweilige Temperatursensorelement ermittelt wird, sondern aus vier Parametern in Form von Messwerten 9, 10, 11, 12. Somit unterscheidet sich das erfindungsgemäße Verfahren also auch anhand der Anzahl von Parametern die zur Ermittlung der Flussrate bzw. Strömungsgeschwindigkeit in die Berechnung miteinfließen von den aus dem Stand der Technik bekannten Verfahren.

Die Parameter $a_n$ werden zur Berechnung des absoluten Widerstandswertes der beiden Temperatursensorelement $T_1$ bzw. $T_2$ gemäß der nachfolgenden Gleichung 3 bestimmt.

$$T_n \text{ [Ohm]} = R_n * (U - 2*a_n)/(U + 2*a_n) \qquad \text{(Gleichung 3)}$$

mit

$R_n$ = Widerstandswert der beiden Widerstände $R_1$ und $R_2$
Anzumerken sei an dieser Stelle, dass die Einheit von $T_n$ Ohm beträgt.

Analog erfolgt die Berechnung des Wertes der Widerstandserhöhung gemäß Gleichung 4.

$$\Delta T_n \text{ [Ohm]} = R_n * (U - 2*a_n - B_n)/(U + 2*a_n + B_n) \qquad \text{(Gleichung 4)}$$

Dies lässt sich mit Hilfe des thermischen Koeffizient der Widerstandsänderung (engl.: thermal coefficient of resistivity, TCR) auch gemäß Gleichung 5 als Änderungen der Temperatur an den beiden Temperatursensorelementen $T_1$, $T_2$ ausdrücken.

$$\Delta T[K] = TCR * \Delta R/R \qquad \text{(Gleichung 5)}$$

mit

TCR = Thermischen Koeffizient der Widerstandsänderung

Berechnet man weiter die an den beiden Temperatursensorelementen $T_1$ und $T_2$ abgegebene Wärmeleistung gemäß dem Ohm'schen Gesetz gibt der Quotient aus Temperaturerhöhung und Leistung einen Ausdruck der Dimension Kelvin durch Watt (K/W) als normalisierte Temperaturerhöhung. Alternativ kann auch der Kehrwert des Ausdrucks also ein Ausdruck der Dimension Watt durch Kelvin (W/K) verwendet werden.

Fig. 3d zeigt exemplarisch Werte des Ausdrucks der Dimension K/W für die beiden Temperatursensorelementen $T_1$ und $T_2$. Der Ausdruck beschreibt die Behinderung der Wärmeabfuhr, welche im Wesentlichen auch durch die konvektive Kühlung der Strömung des Mediums 18 bestimmt wird. Durch die sukzessiven Normalisierungen ist dieser Ausdruck im Wesentlichen unabhängig vom Verhältnis der absoluten Widerstandswerte der beiden Temperatursensorelement $T_1$ und $T_2$ sowie deren gegebenenfalls zeitlicher Veränderbarkeit.

Die in Fig. 3d dargestellten Werte des Ausdrucks der Dimension K/W sind in willkürlichen Einheiten über verschiedene Flussraten aufgetragen. Die durchgehende Linie stellt dabei die Differenz der beiden normalisierten Temperaturerhöhungen dar.

Aus Fig. 3d ist erkennbar, dass außerhalb des Wertebereichs zwischen ca. -5..+5 $\mu$l/min die Abkühlung durch die Strömung den Temperaturanstieg begrenzt; die Differenz der beiden Werte für die beiden Temperatursensorelemente $T_1$ und $T_2$ reduziert und damit sogar zur Mehrdeutigkeit führt.

Aus dem Stand der Technik ist es bekannt, eine konstante Übertemperatur zu verwenden, um den nutzbaren Messbereich über solche Grenzen hinaus zu erweitern. Beispielsweise kann hierfür ein zusätzlicher elektronischer Regelkreis vorgesehen sein, der dazu ausgelegt ist, eine konstante Übertemperatur gegen ein weiteres Temperatursensorelement herzustellen.

Im Gegensatz dazu ermöglicht das erfindungsgemäße Verfahren in vorteilhafter Weise eine Linearisierung der in Fig. 3d dargestellten Differenz der beiden normalisierten Temperaturerhöhungen gemäß der nachfolgenden Gleichung 6, sodass es zu einer Elemination der Mehrdeutigkeit kommt. Auf diese Weise ist eine Flussrate ermittelbar ohne dass ein zusätzlicher elektronischer Regelkreis benötigt wird.

$$\text{Flussrate} = \text{Kalibrationsfaktor} * (B_2 - B_1)/(B_1^m + B_2^m) \qquad \text{(Gleichung 6)}$$

mit

m = vorzugsweise 1,5 ... 4,5.

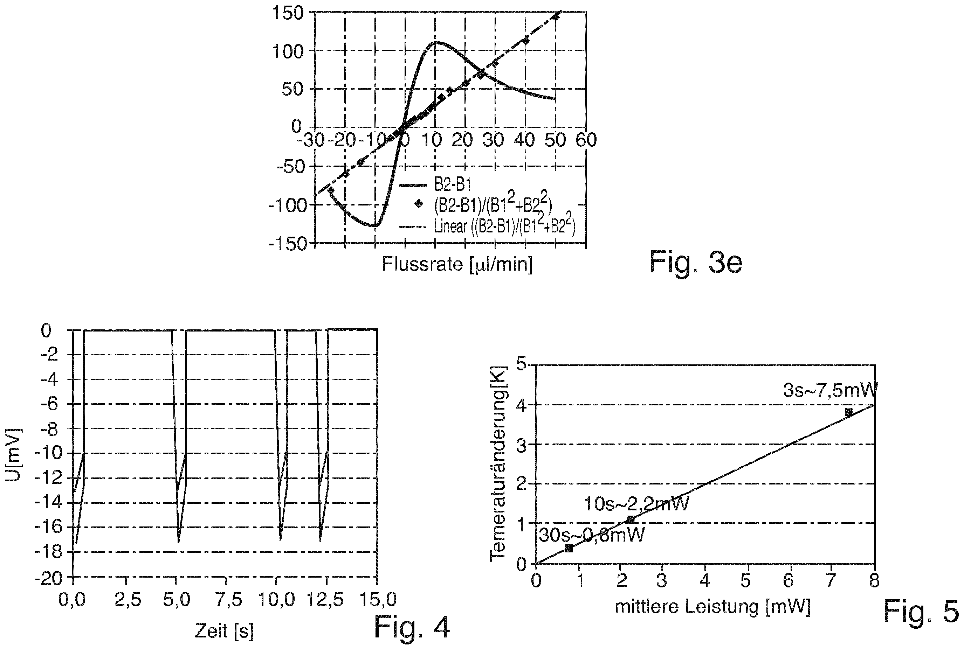

Fig. 3 zeigt das Ergebnis einer solchen Linearisierung.

Das erfindungsgemäße Verfahren bietet neben der Elimination der Mehrdeutigkeit den Vorteil, dass eine algorithmische Anpassung der Heizleistung an die Wärmeabfuhr durchgeführt werden kann, umso eine gewünschte Übertemperatur zu erreichen. Dies bietet den Vorteil, dass auch bei hohen Flussraten, bei denen die konvektive Kühlung den Temperaturanstieg weitgehend verhindert, eine gewünschte Größe der Signaländerung auslösbar ist. Der in Fig. 3d dargestellte Ausdruck K/W bleibt davon unberührt, lediglich das Signal zu Rausch Verhältnis wird gleichmäßiger.

Weiterhin ist es vorteilhaft, wenn die mit dem experimentell ermittelten Kalibrationsfaktor errechnete Flussrate noch weitergehend mittels einer Look-up-Tabelle linearisiert wird. In den Kalibrationsfaktor fließen dabei diverse Parameter ein, die von der verwendeten

Vorrichtung abhängig sind. Beispiele solcher Parameter sind Substratmaterialparameter, Größe, Struktur und/oder Abstand des Heizelementes von den

Temperatursensorelementen.

Fig. 4 zeigt eine Darstellung der wiederholten Durchführung einer Messung. Hierzu werden die zuvor beschriebenen Verfahrensschritte gemäß einem vorgegebenen Zeitintervall bzw. Periode erneut ausgeführt. Aus Fig. 4 wird ersichtlich, dass das erfindungsgemäße Verfahren bzw. dessen Verfahrensschritte in willkürlichen Zeitintervallen wiederholt werden können. Dieses Zeitintervall kann kürzer oder auch länger gewählt werden, um das Verfahren an spezifische Bedingungen anzupassen. Beispielsweise kann das Zeitintervall kürzer gewählt werden, um durch eine Bildung eines laufenden Mittelwertes die Messgenauigkeit zu erhöhen. Das Zeitintervall kann aber auch länger gewählt werden, um bspw. den Energieverbrauch und/oder Wärmeeintrag ins Medium 18 zu minimieren bzw. reduzieren. Die Wahl des "richtigen" Zeitintervalls hängt also, wie bereits erwähnt, von den äußeren Bedingungen, bspw. dem Bereich in dem das erfindungsgemäße Verfahren Einsatz findet, ab. So ist die Wahl eines längeren Zeitintervalls, bspw. von 30 Sekunden, insbesondere auch im Bereich der Bioanalytik von Vorteil. Durch ein längeres Zeitintervall kann die thermische Leistung, welche an das Medium abgegeben wird, reduziert werden, umso den meist temperaturempfindlichen Analyten nicht zu zerstören.

Fig. 5 zeigt eine Modulation der mittleren abgegebenen Leistung durch Änderung des vorgegebenen Zeitintervalls. Hierzu wurde das vorgegebene Zeitintervall auf 3 Sekunden, 10 Sekunden und 30 Sekunden eingestellt. Zur Erfassung der beiden Temperaturanstiege wurden die Messwerte mittels des jeweiligen ersten bzw. zweiten Temperatursensorelementes für eine Messdauer von 1,15 Sekunden aufgenommen. Die thermische Leistung während der Messung betrug jeweils 19,5 mW. Hieraus ergibt sich eine an das Medium abgegebene mittlere thermische Leistung von ca. 0,8 Watt bei einem Zeitintervall von 30 Sekunden, eine mittlere thermische Leistung von ca. 2,2 Watt bei einem Zeitintervall von 10 Sekunden und eine mittlere thermische Leistung von ca. 7,5 Watt bei einem Zeitintervall von 3 Sekunden mit einer Messdauer von jeweils 1,15 Sekunden.

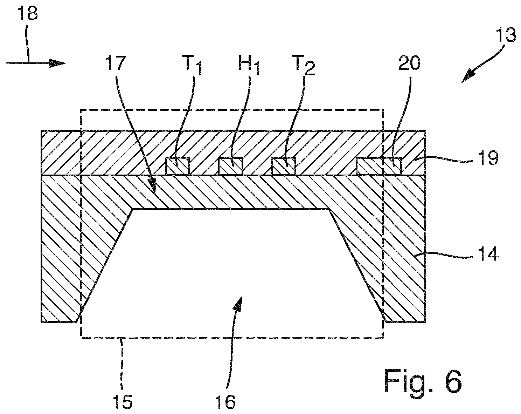

Figur 6 zeigt einen Querschnitt einer Ausgestaltung der erfindungsgemäßen Vorrichtung 13 in Form eines Sensorchips zur Bestimmung einer Flussrate bzw. Strömungsgeschwindigkeit. Hierbei weist die Vorrichtung 13 ein Substrat 14 auf, welches optional in einem ersten Bereich 15 eine Aussparung 16 umfasst, so dass eine Membran 17 ausgebildet wird. Auf der Membran 17 ist das Heizelement $H_1$ derart aufgebracht, dass es sich zwischen dem ersten und dem zweiten Temperatursensorelement $T_1$ und $T_2$ entlang der Strömungsrichtung des Mediums 18 befindet und dazu dient, das Medium 18 zu erhitzen. Die beiden Temperatursensorelemente $T_1$ und $T_2$ sind ebenfalls auf der Membran 17 aufgebracht und vorzugsweise derart angeordnet, dass sie in dem ersten Bereich 15 liegen. Mittels dieser beiden Temperatursensorelemente $T_1$ und $T_2$ wird die Temperatur des an dem Heizelement $H_1$ erhitzten Mediums 18 erfasst. Zum Schutz des Heizelementes $H_1$ und der beiden Temperatursensorelemente $T_1$ und $T_2$ ist vorzugsweise eine dielektrische Schicht 19 zum Schutz der Elemente aufgebrachte.

Die Vorrichtung umfasst ferner eine Steuer- und/oder Regeleinheit 20 die dazu ausgelegt ist, das zuvor beschriebene Verfahren auszuführen. Hierzu umfasst die Steuer- und/oder Regeleinheit insbesondere zumindest eine der in Fig. 2 dargestellten Schaltungen, Mittel zum Steuern des Schalters S, Mittel zum Messen der Messpunkte $V_1$ und/oder $V_2$, Mittel zum Einstellen des Stromes $I_1$ bzw. $I_2$ und Mittel zum Berechnen der Flussrate.

In Fig. 6 ist die Steuer- und/oder Regeleinheit als Teil des Sensorchips dargestellt. Alternativ hierzu kann die Steuer- und/oder Regeleinheit auch separat von dem Sensorchip ausgebildet sein.

## Bezugszeichenliste

| | |
|---|---|
| $a_n$ | Konstanten |
| $b_n$ | Steigungswerte |
| $I_1$ bzw. $I_2$ | (regelbare) Stromquellen |
| $H_1$ | Heizelement |
| $P_1$ | Leistungsquelle |
| $R_n$ | Widerstände |
| S | Schalter |
| $T_1$ | Erstes Temperatursensorelement |
| $T_2$ | Zweites Temperatursensorelement |
| U | (regelbare) Spannungsquelle |
| $V_1$ bzw. $V_2$ | Messpunkte |
| 1 | Erste Struktur |
| 2 | Zweite Struktur |
| 3 | elektrisch leitfähige Schichten |
| 4 | Erster Messkontakt |
| 5 | Zweiter Messkontakt |
| 6 | Gemeinsamer Massekontakt |
| 7 | Ersten Temperaturanstieg |

(fortgesetzt)

| 8 | Zweiter Temperaturanstieg |
|---|---|
| 9 | Erster Messwert |
| 10 | Zweiter Messwert |
| 11 | Dritter Messwert |
| 12 | Vierter Messwert |
| 13 | Vorrichtung |
| 14 | Substrat |
| 15 | Erster Bereich |
| 16 | Aussparung |
| 17 | Membran |
| 18 | Medium |
| 19 | Dielektrische Schicht |
| 20 | Steuer- und/oder Regeleinheit |
| 21 | Erste Zuleitung |
| 22 | Zweite Zuleitung |

**Patentansprüche**

1. Verfahren zur Bestimmung einer Flussrate bzw. Strömungsgeschwindigkeit eines Mediums (18), welches zumindest mit einem ersten und einem zweiten Temperatursensorelement ($T_1$, $T_2$) und einem Heizelement ($H_1$) in Wechselwirkung steht, wobei das Verfahren die folgenden Verfahrensschritte aufweist:

   - Erhitzung des Mediums (18) mittels des Heizelements ($H_1$) für eine vorgegebene Heizdauer, wobei das Medium (18) vor der Erhitzung weitgehend in einem thermischen Gleichgewicht mit zumindest dem ersten und zweiten Temperatursensorelement ($T_1$, $T_2$) steht;
   - Erfassung zumindest eines ersten und eines zweiten Messwertes (9, 10), wobei sich der zweite Messwert (10) zeitlich nach dem ersten Messwert (9) befindet, mit Hilfe des ersten Temperatursensorelementes ($T_1$) und zumindest eines dritten und eines vierten Messwertes (11, 12), wobei sich der vierte Messwert (12) zeitlich nach dem dritten Messwert (11) befindet, mit Hilfe des zweiten Temperatursensorelementes ($T_2$) zur Charakterisierung eines ersten bzw. zweiten Temperaturanstieges (7, 8) des Mediums (18);
   - Ermittlung der Flussrate bzw. Strömungsgeschwindigkeit des Mediums (18) anhand der zumindest beiden Temperaturanstiege (7, 8),

   **dadurch gekennzeichnet, dass** zur Charakterisierung der beiden Temperaturanstiege (7, 8) für den erfassten ersten Temperaturanstieg (7) eine erste Konstante ($a_1$) und ein erster Steigungswert ($b_1$) und für den zweiten Temperaturanstieg (8) eine zweite Konstante ($a_2$) und ein zweiter Steigungswert ($b_2$) ermittelt wird, wobei über die beiden Konstanten ($a_1$, $a_2$) jeweils ohmsche Widerstandswerte ($R_1$, $R_2$) für das jeweilige Temperatursensorelement ($T_1$, $T_2$) im thermischen Gleichgewicht ermittelt werden und über die beiden Steigungswerte ($b_1$, $b_2$) jeweils eine Temperaturerhöhung ($\Delta T_1$, $\Delta T_2$) für das jeweilige Temperatursensorelement ($T_1$, $T_2$) ermittelt wird, wobei die Bestimmung von Konstanten und Steigungswerten nach einer Transformation der Zeitwerte zur Linearisierung des Temperaturanstiegs durchgeführt wird.

2. Verfahren nach Anspruch 1, wobei das Heizelement ($H_1$) zur Erhitzung des Mediums (18) für eine vorgegebene Heizdauer von einem ersten Zustand, insbesondere ersten Spannungszustand, in dem sich das Heizelement ($H_1$) im thermischen Gleichgewicht befindet in einen zweiten Zustand gebracht wird und wobei das Heizelement ($H_1$) nach der vorgegebenen Heizdauer wieder auf den ersten Zustand gebracht wird,

3. Verfahren nach einem der Ansprüche 1 oder 2, wobei die Erfassung des zweiten und vierten Messwertes (10, 12) noch während die Temperatur des jeweiligen Temperatursensorelementes ($T_1$, $T_1$) steigt erfolgt.

4. Verfahren nach einem oder mehreren der vorhergehenden Ansprüche, wobei als vorgegebene Heizdauer eine Dauer von weniger als 2 Sekunden verwendet wird, und/oder
   wobei die Messwerte (9, 10, 11, 12) innerhalb der vorgegebenen Heizdauer erfasst werden.

5. Verfahren nach einem oder mehreren der vorhergehenden Ansprüche, wobei die Verfahrensschritte, insbesondere die Erhitzung des Mediums (18), wiederkehrend durchgeführt werden.

6. Verfahren nach einem der Ansprüche 6, wobei ein Zeitintervall zwischen zwei aufeinanderfolgenden Erhitzungen des Mediums (18) so gewählt wird, dass sich innerhalb des Zeitintervalls das thermische Gleichgewicht zwischen zumindest dem ersten und zweiten Temperatursensorelement ($T_1$, $T_1$) und dem Medium (18) im Wesentlichen wieder eingestellt hat.

7. Verfahren nach einem oder mehreren der vorhergehenden Ansprüche, wobei zur Ermittlung der Flussrate bzw. Strömungsgeschwindigkeit des Mediums (18) zumindest einer der folgenden Schritte durchgeführt wird:

   - Bestimmung jeweils einer an das erste bzw. das zweite Temperatursensorelement ($T_1$, $T_2$) abgegebenen thermischen Leistung durch das Medium;
   - Normalisierung der beiden Temperaturerhöhungen;
   - Linearisierung der Differenz der beiden normalisierten Temperaturerhöhungen durch Division mit einer Funktion welche jene normalisierten Temperaturerhöhungen oder deren Kehrwerte enthält;
   - eine Multiplikation der linearisierten Differenz der beiden normalisierten Temperaturerhöhungen oder deren Kehrwerte mit einem Kalibrationsfaktor die Flussrate bzw. Strömungsgeschwindigkeit ermittelt wird;
   - Korrektur der ermittelten Flussrate bzw. Strömungsgeschwindigkeit über eine Lookup-Tabelle.

8. Verfahren nach einem oder mehreren der vorhergehenden Ansprüche, wobei das Heizelement ($H_1$) mit einem Tastverhältnis von nicht mehr als 10% betrieben wird, um eine ins Medium (18) abgegebene thermische Leistung zu begrenzen, und/oder wobei die ins Medium (18) abgegebene mittlere thermische Leistung nicht mehr als 2 mW beträgt, und/oder
   wobei das Medium (18) eine biologische Flüssigkeit umfasst.

9. Vorrichtung (13) zur Bestimmung einer Flussrate bzw. Strömungsgeschwindigkeit eines Mediums (18) mit einer Struktur (1, 2) und einer Recheneinheit (20), wobei die Struktur (1,2) in thermischer Wechselwirkung mit dem Medium (18) steht und zumindest ein erstes Temperatursensorelement ($T_1$), ein zweites Temperatursensorelement ($T_2$) und ein Heizelement ($H_1$) umfasst, **dadurch gekennzeichnet, dass** die Recheneinheit (20) dazu ausgelegt ist, das Verfahren nach zumindest einem der Ansprüche 1 bis 8 durchzuführen.

10. Vorrichtung nach Anspruch 9, wobei das Heizelement ($H_1$) zumindest in eines der beiden Temperatursensorelemente ($T_1$, $T_2$) integriert ist.

11. Vorrichtung nach Anspruch 9, wobei das Heizelement ($H_1$) separat von dem ersten und dem zweiten Temperatursensorelement ($T_1$, $T_2$) ausgebildet ist und zwischen den beiden Temperatursensorelementen ($T_1$, $T_2$) angeordnet ist.

12. Vorrichtung nach einem der Ansprüche 9 bis 11, wobei die Struktur (1, 2), welche das erste und das zweite Temperatursensorelement ($T_1$, $T_2$) und das Heizelement ($H_1$) umfasst, auf einem Substrat ausgebildet ist und eine Fläche kleiner einem Quadratmillimeter aufweist.

13. Vorrichtung nach einem der Ansprüche 9 bis 12, wobei die Struktur (1, 2) eine mikrostrukturierte elektrisch leitfähige Schicht (3) aufweist und das erste Temperatursensorelement ($T_1$) einen ersten ohmschen Widerstand ($R_1$) und das zweite Temperatursensorelement ($T_2$) einen zweiten ohmschen Widerstand ($R_2$) aufweist, wobei die Widerstände ($R_1$, $R_2$) einen Toleranzwert von bis zu 10% aufweisen, wobei die Widerstände ($R_1$, $R_2$) um den Toleranzwert voneinander abweichen können.

14. Katheder aufweisend zumindest eine Vorrichtung nach einem der Ansprüche 9 bis 13.

15. Lab-on-a-Chip System aufweisend zumindest eine Vorrichtung nach einem der Ansprüche 9 bis 13.

**Claims**

1. Procedure designed to determine a flow rate or a flow velocity of a medium (18), which at least interacts with a first and a second temperature sensor element ($T_1$, $T_2$) and a heating element ($H_1$), wherein said procedure comprises the following steps:

   - Heating of the medium (18) by means of the heating element ($H_1$) for a predefined heating period, wherein, prior to the heating, the medium (18) is largely in thermal equilibrium with at least the first and the second temperature sensor element ($T_1$, $T_2$);
   - Measurement of at least a first and a second measured value (9, 10), wherein the second measured value (10) is chronologically after the first measured value (9), with the aid of the first temperature sensor element ($T_1$) and at least a third and a fourth measured value (11, 12), wherein the fourth measured value (12) is chronologically after the third measured value (11), with the aid of the second temperature sensor element ($T_2$), for the purpose of characterizing a first and a second temperature increase (7, 8) of the medium (18);
   - Determination of the flow rate or the flow velocity of the medium (18) using the at least two temperature increases (7, 8),

   **characterized in that**
   in order to characterize the two temperature increases (7, 8), a first constant ($a_1$) and a first slope value ($b_1$) are determined for the first temperature increase (7), and a second constant ($a_2$) and a second slope value ($b_2$) are determined for the second temperature increase (8), wherein Ohmic resistance values ($R_1$, $R_2$) for the temperature sensor element ($T_1$, $T_2$) are determined in thermal equilibrium by means of the two constants ($a_1$, $a_2$), and a temperature increase ($\Delta T_1$, $\Delta T_2$) for the temperature sensor element ($T_1$, $T_2$) is determined by means of the two slope values ($b_1$, $b_2$), wherein the constants and the slope values are determined following a transformation of the time values for the linearization of the temperature increase.

2. Procedure as claimed in Claim 1, wherein the heating element ($H_1$) is taken from a first state, particularly a first voltage state in which the heating element ($H_1$) is in thermal equilibrium, to a second state for the purpose of heating the medium (18) for a predefined heating duration, and wherein the heating element ($H_1$) is returned to the first state after the predefined heating duration.

3. Procedure as claimed in one of the Claims 1 or 2, wherein the second and the fourth measured value (10, 12) are measured while the temperature of the temperature sensor element ($T_1$, $T_2$) is increasing.

4. Procedure as claimed in one or more of the previous claims, wherein a duration less than 2 seconds is used as a predefined heating duration,
   and/or
   wherein the measured values (9, 10, 11, 12) are recorded within the predefined heating duration.

5. Procedure as claimed in one or more of the previous claims, wherein the steps of the procedure, particularly the heating of the medium (18), are carried out repeatedly.

6. Procedure as claimed in Claim 6, wherein a time interval between two consecutive heating routines of the medium (18) is selected in such a way that, during the time interval, the thermal equilibrium between at least the first and the second temperature sensor element ($T_1$, $T_2$) and the medium (18) is essentially reestablished.

7. Procedure as claimed in one or more of the previous claims, wherein at least one of the following steps is performed to determine the flow rate or the flow velocity of the medium (18):

   - Determination of a thermal power given off by the medium to a first and to the second temperature sensor element ($T_1$, $T_2$);
   - Normalization of the two temperature increases
   - Linearization of the difference between the two normalized temperature increases by dividing with a function containing the standardized temperature increases or their reciprocal values;
   - Multiplication of the linearized difference of the two normalized temperature increases or their reciprocal values by a calibration factor so that the flow rate or flow velocity is determined;
   - Correction of the determined flow rate or flow velocity using a look-up table.

8. Procedure as claimed in one or more of the previous claims, wherein the heating element ($H_1$) is operated with a duty cycle of not more than 10 % in order to limit a thermal power given off to the medium (18), and/or

   wherein the average thermal power given off to the medium (18) is not more than 2 mW, and/or
   wherein the medium (18) comprises a biological liquid.

9. Apparatus (13) designed to determine a flow rate or a flow velocity of a medium (18), with a structure (1, 2) and a computing unit (20), wherein the structure (1, 2) is in thermal interaction with the medium (18) and comprises at least a first temperature sensor element ($T_1$), a second temperature sensor element ($T_2$) and a heating element ($H_1$), **characterized in that** the computing unit (20) is designed to perform the procedure as claimed in at least one of the Claims 1 to 8.

10. Apparatus as claimed in Claim 9, wherein the heating element ($H_1$) is integrated at least in one of the two temperature sensor elements ($T_1$, $T_2$).

11. Apparatus as claimed in Claim 9, wherein the heating element ($H_1$) is formed separately from the first and the second temperature sensor element ($T_1$, $T_2$) and is arranged between the two temperature sensor elements ($T_1$, $T_2$).

12. Apparatus as claimed in one of the Claims 9 to 11, wherein the structure (1, 2), which comprises the first and the second temperature sensor element ($T_1$, $T_2$) and the heating element ($H_1$), is formed on a substrate and has a surface of less than one square millimeter.

13. Apparatus as claimed in one of the Claims 9 to 12, wherein the structure (1, 2) comprises a microstructured electrically conductive layer (3) and wherein the first temperature sensor element ($T_1$) has a first Ohmic resistance ($R_1$) and the second temperature sensor element ($T_2$) has a second Ohmic resistance ($R_2$), wherein the resistances ($R_1$, $R_2$) have a tolerance value of up to 10 %, wherein the resistances ($R_1$, $R_2$) can deviate from one another by the tolerance value.

14. Catheter comprising at least an apparatus as claimed in one of the Claims 9 to 13.

15. Lab-on-a-chip system having at least an apparatus as claimed in one of the Claims 9 to 13.


**Revendications**

1. Procédé destiné à la détermination d'un débit ou d'une vitesse d'écoulement d'un produit (18), lequel interagit avec au moins un premier et un deuxième élément capteur de température ($T_1$, $T_2$) et un élément chauffant ($H_1$), ledit procédé comprenant les étapes suivantes :

   - Échauffement du produit (18) au moyen de l'élément chauffant ($H_1$) pendant une période de chauffage prédéfinie, le produit (18) étant largement en équilibre thermique avec au moins le premier et le deuxième élément capteur de température ($T_1$, $T_2$) avant l'échauffement ;
   - Acquisition d'au moins une première et une deuxième valeur mesurée (9, 10), la deuxième valeur mesurée (10) étant située temporellement après la première valeur mesurée (9), à l'aide du premier élément capteur de température ($T_1$) et au moins une troisième et une quatrième valeur mesurée (11, 12), la quatrième valeur mesurée (12) étant située temporellement après la troisième valeur mesurée (11), à l'aide du deuxième élément capteur de température ($T_2$), pour caractériser respectivement une première et une deuxième hausse de température (7, 8) du produit (18) ;
   - Détermination du débit ou de la vitesse d'écoulement du produit (18) en utilisant les au moins deux hausses de température (7, 8),

   **caractérisé**
   **en ce que**, pour caractériser les deux hausses de température (7, 8), on détermine une première constante ($a_1$) et une première valeur de pente ($b_1$) pour la première hausse de température (7) mesurée, et une deuxième constante ($a_2$) et une deuxième valeur de pente ($b_2$) pour la deuxième hausse de température (8) mesurée, des valeurs de résistance ohmique ($R_1$, $R_2$) pour l'élément capteur de température ($T_1$, $T_2$) respectif en équilibre thermique étant déterminées par l'intermédiaire des deux constantes ($a_1$, $a_2$), et une hausse de température ($\Delta T_1$, $\Delta T_2$) pour l'élément capteur de température ($T_1$, $T_2$) respectif étant déterminée par l'intermédiaire des deux valeurs de pente ($b_1$, $b_2$),

la détermination des constantes et des valeurs de pente étant effectuée après une transformation des valeurs de temps pour la linéarisation de la hausse de température.

2.  Procédé selon la revendication 1, pour lequel l'élément chauffant ($H_1$) est amené d'un premier état, notamment un premier état de tension, dans lequel l'élément chauffant ($H_1$) est en équilibre thermique, à un deuxième état pendant une durée de chauffage prédéterminée afin d'échauffer le produit (18), et l'élément chauffant ($H_1$) étant ramené au premier état après la durée de chauffage prédéfinie.

3.  Procédé selon l'une des revendications 1 ou 2, pour lequel l'acquisition de la deuxième et de la quatrième valeur mesurée (10, 12) est effectuée alors que la température de l'élément capteur de température ($T_1$, $T_2$) respectif est encore en train d'augmenter.

4.  Procédé selon l'une ou plusieurs des revendications précédentes, pour lequel une durée inférieure à 2 secondes est utilisée comme durée de chauffage prédéfinie,
    et/ou
    les valeurs mesurées (9, 10, 11, 12) étant acquises au sein de la durée de chauffage prédéfinie.

5.  Procédé selon l'une ou plusieurs des revendications précédentes, pour lequel les étapes du procédé, notamment l'échauffement du produit (18), sont réalisées de manière répétée.

6.  Procédé selon la revendication 6, pour lequel un intervalle de temps entre deux échauffements successifs du produit (18) est choisi de telle sorte que, dans l'intervalle de temps, l'équilibre thermique entre au moins le premier et le deuxième élément capteur de température ($T_1$, $T_2$) et le produit (18) est pour l'essentiel rétabli.

7.  Procédé selon l'une ou plusieurs des revendications précédentes, pour lequel au moins l'une des étapes suivantes est exécutée pour déterminer le débit ou la vitesse d'écoulement du produit (18) :

    - Détermination d'une puissance thermique délivrée respectivement au premier et au deuxième élément capteur de température ($T_1$, $T_2$) par le produit ;
    - Normalisation des deux hausses de température
    - Linéarisation de la différence entre les deux hausses de température normalisées par division avec une fonction contenant ces hausses de température normalisées ou leurs valeurs réciproques ;
    - Multiplication de la différence linéarisée des deux hausses de température normalisées ou de leurs valeurs réciproques par un facteur d'étalonnage, ce par quoi le débit ou la vitesse d'écoulement est déterminé ;
    - Correction, à l'aide d'une table de conversion, du débit ou de la vitesse d'écoulement déterminé(e).

8.  Procédé selon l'une ou plusieurs des revendications précédentes, pour lequel l'élément chauffant ($H_1$) est actionné selon un rapport cyclique ne dépassant pas 10 % pour limiter une puissance thermique délivrée dans le produit (18), et/ou

    la puissance thermique moyenne délivrée dans le produit (18) ne dépassant pas 2 mW, et/ou
    le produit (18) comprenant un liquide biologique.

9.  Dispositif (13) destiné à la détermination d'un débit ou d'une vitesse d'écoulement d'un produit (18), lequel dispositif comprend une structure (1, 2) et une unité de calcul (20), la structure (1, 2) étant en interaction thermique avec le produit (18) et comprenant au moins un premier élément capteur de température ($T_1$), un deuxième élément capteur de température ($T_2$) et un élément chauffant ($H_1$), **caractérisé en ce que** l'unité de calcul (20) est conçue pour exécuter le procédé selon au moins l'une des revendications 1 à 8.

10. Dispositif selon la revendication 9, pour lequel l'élément chauffant ($H_1$) est intégré dans au moins l'un des deux éléments capteurs de température ($T_1$, $T_2$).

11. Dispositif selon la revendication 9, pour lequel l'élément chauffant ($H_1$) est formé séparément du premier et du deuxième élément capteur de température ($T_1$, $T_2$) et est disposé entre les deux éléments capteurs de température ($T_1$, $T_2$).

12. Dispositif selon l'une des revendications 9 à 11, pour lequel la structure (1, 2), laquelle comprend le premier et le deuxième élément capteur de température ($T_1$, $T_2$) et l'élément chauffant ($H_1$), est formée sur un substrat et présente une surface inférieure à un millimètre carré.

13. Dispositif selon l'une des revendications 9 à 12, pour lequel la structure (1, 2) comprend une couche électriquement conductrice microstructurée (3) et le premier élément capteur de température ($T_1$) comprend une première résistance ohmique ($R_1$) et le deuxième élément capteur de température ($T_2$) comprend une deuxième résistance ohmique ($R_2$), les résistances ($R_1$, $R_2$) présentant une valeur de tolérance allant jusqu'à 10 %, les résistances ($R_1$, $R_2$) pouvant différer les unes des autres de la valeur de tolérance.

14. Cathéter comprenant au moins un dispositif selon l'une des revendications 9 à 13.

15. Système de laboratoire sur puce comprenant au moins un dispositif selon l'une des revendications 9 à 13.

Fig. 1a

Fig. 1b

Fig. 2b

Fig. 2d

Fig. 2a

Fig. 2c

Fig. 3a

Fig. 3b

Fig. 3c

Fig. 3d

## Fig. 3e

## Fig. 5

## Fig. 4

18

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1094306 A1